# EUROPÄISCHE PATENTSCHRIFT

(11) **EP 0 673 832 B1**
(45) Veröffentlichungstag und Bekanntmachung des Hinweises auf die Patenterteilung: **08.09.1999**
(21) Anmeldenummer: 94117801.4
(22) Anmeldetag: 10.11.1994
(51) Int. Cl.: B62K 25/30

(54) **Gefedertes Fahrrad**
Bicycle with suspension
Bicyclette à suspension

(30) Priorität: 24.03.1994 DE 9405076 U
(43) Veröffentlichungstag der Anmeldung: 27.09.1995
(73) Patentinhaber: Gally, Otto, D-82490 Farchant (DE)
(72) Erfinder: Gally, Otto, D-82490 Farchant (DE)
(74) Vertreter: Patentanwälte Dipl.-Ing. R. Splanemann Dr. B. Reitzner Dipl.-Ing. K. Baronetzky

(56) Entgegenhaltungen:
- BE-A- 475 631
- DE-C- 753 841
- FR-A- 379 488

## Beschreibung

Die Erfindung betrifft ein gefedertes Fahrrad gemäß dem Oberbegriff von Anspruch 1.

Gefederte Fahrräder, bei denen die Tretlagerachse mit der Schwenkachse für die Federung übereinstimmt, sind seit längerem bekannt. Eine derartige Lagerung hat den Vorteil, daß eine Anpassung an eine Längenänderung des Antriebsstrangs, meist also der Fahrradkette, nicht vorgenommen werden muß. Die Lagerung der Hinterschwinge, die in der Regel zwei Hinterstreben aufweist, erfordert jedoch besondere Maßnahmen für die Lagerung, um eine sichere und verwindungssteife Abstützung zu gewährleisten.

So ist es vorgeschlagen worden, die Hinterschwinge über einen recht aufwendigen Doppelrahmen mit einer Mehrzahl von Querversteifungen abzustützen. Diese Lösung bedingt jedoch zum einen einen hohen konstruktiven Aufwand, zum anderen ein erhebliches Zusatzgewicht, so daß sie in der Praxis unrealistisch ist.

Ferner ist es bekannt geworden, die Hinterschwinge über eine innenliegende Torsionsfeder an einer Tretlagergehäusehülse federnd aufzuhängen. Diese Lösung hat sich jedoch nicht durchgesetzt, nachdem die Verbindung zwischen Rahmen und Hinterschwinge lediglich über das Gummitorsionselement erfolgte, so insgesamt eher schwammige Fahreigenschaften vorlagen.

Ein weiteres Problem dieser Lösung ist die Montage. Ein zwischen den Hinterstreben und hinter dem Tretlager befindliches Schutzblech-Halterohr verhindert, daß die für die Kraftübertragung erforderlichen Teile frei eingesteckt werden können. Daher muß das Halterohr im nachhinein angelötet werden, was herstellungstechnisch sehr ungünstig ist, es sei denn, es erfolgt ein Aufbiegen der vorderen Enden der Hinterschwinge soweit, daß die Teile ineinander eingefügt werden können. Dies ist aber aus Materialschwächungsgründen unerwünscht.

Bei gefederten Fahrrädern, die auch im sportlichen Einsatz, also mit geringen Kraftübertragungsverlusten gefahren werden können sollen, ist es wichtig, daß die durch die Krafteinleitung durch den Fahrer und durch das Gelände erzeugten Durchbiegungen, Torsionen und seitlichen Auslenkungen des Rahmens und die hierdurch verbrauchten Kräfte gering bleiben. Die Federung sollte nur in vertikaler Richtung erfolgen und der Antritt des Fahrers sollte nach Möglichkeit den Andruck, also die Bodenhaftung, erhöhen.

Für die Bereitstellung leichtgewichtiger Fahrräder ist es an sich günstig, mit relativ kleinen Rahmenhöhen auszukommen, was entsprechend flache Winkel beispielsweise zwischen Unterrohr und Oberrohr, aber auch zwischen Hinterstrebe und Sattelstrebe bedingt. Derart flache Winkel erhöhen die Anforderung an die Torsionssteifheit, so daß es wichtig ist, nach Möglichkeit eine Torsionssteifheit bereits zwischen den beiden Hinterradschwingen zu erzeugen. Diese Torsionssteifheit ist bei der bekannten Lösung nur bedingt gegeben, nachdem die der Übertragung der Torsionsfederkraft dienenden Teile praktisch nur über einen Sechskant gelagert sind, was stets ein gewisses Spiel bedingt, das zwar hinsichtlich der Einfederung selbst praktisch nicht nachteilig ist, wohl hingegen hinsichtlich der Torsion der Hinterschwinge um eine horizontale Längsachse, nachdem entsprechende Kippbewegungen nicht ganz auszuschließen sind.

Daher liegt der Erfindung die Aufgabe zugrunde, ein gefedertes Fahrrad gemäß dem Oberbegriff von Anspruch 1 zu schaffen, das montagefreundlicher als bekannte Lösungen ausgebildet ist, einen torsionssteiferen Aufbau der Hinterschwinge ermöglicht und dennoch eine im Vergleich mit bekannten Lösungen leichtere Bauweise ermöglicht.

Diese Aufgabe wird erfindungsgemäß durch Anspruch 1 gelöst. Vorteilhafte Weiterbildungen ergeben sich aus den Unteransprüchen.

Die erfindungsgemäße Lösung zeichnet sich gegenüber den vorbekannten Konstruktionen durch eine großflächige und breite Lagerung unmittelbar zwischen Tretlagermuffe und Tretlagerflanschen der Hinterschwinge aus. Hierbei weist die Hinterschwingenmuffe vorteilhafterweise eine Querstrebe einstückig auf, so daß ein nachträgliches Anlöten der Querstrebe entfallen kann.

Dennoch läßt sich die erfindungsgemäße Federung besonders einfach montieren, indem nämlich lediglich ein Tretlagergehäuse, beispielsweise ein an sich bekanntes gekapseltes Tretlager mit einzuschraubenden Lagerschalen, in die in Dekkung gebrachten Ausnehmungen von Tretlagerflanschen und Tretlagermuffe eingesteckt wird und nach Befestigung - sei es durch Aufschrumpfen, durch Kleben oder in sonstiger geeigneter Weise - mit der Querstrebe eine käfigartige Struktur bildet, so daß die Federschwinge insgesamt sehr torsionssteif wird.

Wenn beispielsweise eine Kraft an dem linken hinteren Ausfallende nach oben und an dem rechten hinteren Ausfallende nach unten ausgeübt wird - eine Belastungssituation, wie sie bei einer Kurvenschräglage im Betrieb auftritt -, setzt die erfindungsgemäße Hinterschwinge dieser Belastung ein erhebliches Widerstandsmoment entgegen. Dementsprechend kann die Sattelstrebe, die ebenfalls für die Abstützung derartiger Momente grundsätzlich geeignet ist, in einem vergleichsweise flachen Winkel zur Hinterstrebe verlaufen, was einen entsprechend tiefliegenden Schwerpunkt und damit eine günstige Straßen- und Geländelage ermöglicht.

Besonders günstig ist es, daß die Erfindung die Verwendung im Grunde eines handelsüblichen Tretlagergehäuses ermöglicht, wie es in großen Stückzahlen eingesetzt wird. Über entsprechende für die Gleitlagerung vorgesehene Spielausgleichsringe läßt sich eine sichere und großflächige Abstützung an der im Grunde ebenfalls handelsüblichen Tretlagermuffe erzielen, wobei diese lediglich entweder endseitig verkürzt ist, oder das Tretlagergehäuse soweit verlängert ist, daß seitlich Tretlagerflansche der Hinterschwinge je das Tretlagergehäuse um- oder übergreifen können. Das Tretlagergehäuse mit seinem Lagerzylinder ist so fest mit der Hinterschwinge verbunden und bildet eine stabile, torsionssichere und unnachgiebige Einheit, wobei zu der bevorzugt hochovalen Querstrebe eine Art Gitterstruktur gebildet ist.

Die Querstrebe ist bevorzugt etwas mehr als der Durchmesser des Tretlagers von diesem beabstandet, so daß die Hebelverhältnisse für die erwünschte Torsionssteifigkeit ausreichend sind. Es versteht sich, daß bei entsprechend größerem Abstand zum Profil des Hinterreifens auch ein entsprechend größerer Abstand günstig gewählt werden kann.

Besonders günstig ist es, wenn die Querstrebe an der Hinterschwingenmuffe einstückig ausgebildet ist. Dies vermeidet nicht nur die ansonsten erforderliche Lötarbeit, sondern erhöht auch die Stabilitität und erlaubt es, die so gebildete Hinterschwingenmuffe als komplette Einheit mit den in der Regel aus Rohren gebildeten Hinterschwingen vorzufertigen, bevor eine Verbindung mit dem Rahmen erfolgt.

Trotz der Verwendung handelsüblicher Bauteile läßt sich das Schwenklager des erfindungsgemäßen Fahrrads auch abgedichtet ausbilden. Hierzu ist es lediglich erforderlich, in den Spalt zwischen den laschen- oder ösenartigen Flanschen beidseitig der Tretlagermuffe je Dichtungsringe einzusetzen. Gewünschtenfalls kann das Tretlagergehäuse mit seinem äußeren Lagerzylinder auch mit einer Bohrung versehen sein, daß der im Inneren des Tretlagers, das ohnehin bevorzugt gekapselt ist, vorhandene Fettvorrat zugleich auch das Schwenklager mitschmiert.

Besonders günstig ist es ferner, daß eine exakte Lagerung über eine vergleichsweise große Auflagefläche zur Verfügung steht. Hierdurch ist nicht nur die Verschleißfestigkeit gut, sondern insbesondere auch die Steifheit gegenüber seitlich einwirkenden Momenten, wobei der Erfindung zugutekommt, daß die Tretlagermuffe sich ziemlich breit über nahezu die gesamte Breite des Tretlagergehäuses erstreckt und lediglich die äußeren Enden des Tretlagergehäuses von den mit der Hinterschwinge verbundenen Tretlagerflanschen umgriffen werden.

Gemäß einer besonders günstigen Ausgestaltung der Erfindung ist es vorgesehen, ein geschraubtes und gekapseltes Tretlager zu verwenden. Bei einem derartigen Tretlager sind die äußeren Lagerschalen je eingeschraubt und überragen das Tretlagergehäuse oder den Lagerzylinder um weniges. Der so gebildete Absatz kann zugleich zur sicheren Aretierung an den Tretlagerflanschen verwendet werden.

Hierzu sind die Tretlagerflansche seitlicher Richtung etwas breiter und stehen somit gegenüber dem Tretlagergehäuse etwas vor. Durch ein entsprechendes Anziehen werden nun die Tretlagerflansche und das Tretlager gegeneinander verspannt, so daß eine sichere Aretierung stattfindet, die gegebenenfalls noch durch Splinte oder dergleichen gesichert werden kann.

Es versteht sich, daß bei dieser Ausgestaltung sogar das komplette Tretlagergehäuse bei Bedarf austauschbar ist, sollte einmal ein Tretlager-Totalschaden auftreten. Jedoch läßt sich, auch wenn die Laschen auf das Tretlagergehäuse aufgeschrumpft oder mit diesem verklebt sind, durch entsprechende Wärmeeinwirkung ein erneutes Lösen zum Austausch des Tretlagergehäuses ermöglichen, auch wenn dieses wohl nur in den wenigstens Fällen überhaupt erforderlich werden könnte.

Bei Bedarf kann auch die Tretlagermuffe in handelsüblicher Weise verwendet werden, wobei dann ein etwas verlängerter Lagerzylinder für das Tretlagergehäuse - und eine entsprechend etwas verlängerte Tretlagerachse - verwendet werden sollte. Die erfindungsgemäße Ausgestaltung eines Schwenklagers eines gefederten Fahrrads hat zudem den Vorteil, daß in der Seitenansicht kein Unterschied zu der Ausgestaltung der Tretlagermuffe eines ungefederten Fahrrads erkenntlich ist, so daß der Nachteil bekannter Lösungen, klobig und schwergewichtig zu wirken und zu sein, vermieden wird.

Es versteht sich, daß im Grunde auch die kinematisch vertauschte Lösung, also mit dem Rahmen verbundene Lagerflanschen, die das Tretlagergehäuse übergreifen, und mit an der Hinterschwinge angebrachter Tretlagermuffe, die auf dem Tretlagergehäuse gleitet, möglich ist, wobei diese Lösung vorliegend nicht ausgeschlossen sein soll, jedoch gegenüber der bevorzugten Ausgestaltung Nachteile aufweist. Erfindungsgemäß bedeutsam ist die mögliche Verwendung eines fertigen, in Großserien hergestellten und insofern preiswerten Tretlagers, das bevorzugt aus einem Lagerzylinder mit glatter Außenfläche besteht, in welchem die für die Lagerung erforderlichen Teile, einschließlich der Tretlagerachse, eingebaut sind.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine schematische Seitenansicht des Rahmens eines erfindungsgemäßen Fahrrads in einem Ausführungsbeispiel; und
- Fig. 2: eine teilweise aufgebrochene Draufsicht auf das Schwenklager des Fahrrads gemäß Fig. 1.

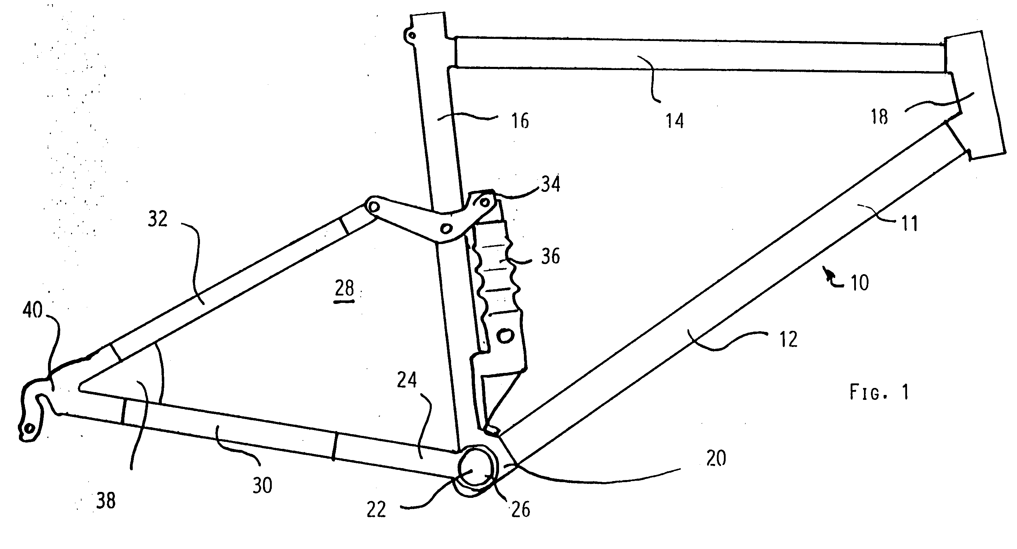

Das in Fig. 1 dargestellte Fahrrad 10 weist einen Rahmen 11 mit einem Unterrohr 12, einem Oberrohr 14, einem Sattelrohr 16 und einem Steuerrohr 18 auf. Die Rohre sind je über Muffen miteinander verbunden, wobei das Steuerrohr 18 insgesamt durch eine Muffe gebildet wird. Bevorzugt besteht der Rahmen 11 aus einer Aluminiumlegierung. Zwischen Sattelrohr 16 und Unterrohr 12 ist eine Tretlagermuffe 20 eingesetzt, die einen Teil eines erfindungsgemäßen Schwenklagers 22 bildet. Sie wirkt zusammen mit einer Hinterschwingenmuffe 24, wobei sowohl die Hinterschwingenmuffe 24 als auch die Tretlagermuffe 20 ein Tretlager 26 umgeben. Die Hinterschwingenmuffe 24 ist Teil eines hinteren Rahmendreiecks 28, das im übrigen durch zwei Hinterstreben, von denen eine Hinterstrebe 30 aus der Fig. 1 ersichtlich ist, sowie zwei Sattelstreben, von denen eine Sattelstrebe 32 aus Fig. 1 ersichtlich ist, gebildet wird.

Das hintere Rahmendreieck 28 weist daneben Elemente für die Bereitsstellung der Federfunktion auf, die in dem bevorzugten Ausführungsbeispiel aus einem doppelten, das Sattelrohr 16 umgreifenden Kniehebel 34 und einer Druckfeder 36 bestehen, die auf der Tretlagermuffe 20 abgestutzt ist. Beide Sattelstreben 32 sind über den Kniehebel 34 miteinander verbunden, so daß sie sich an ihrem oberen Ende einander gegenseitig abstützen.

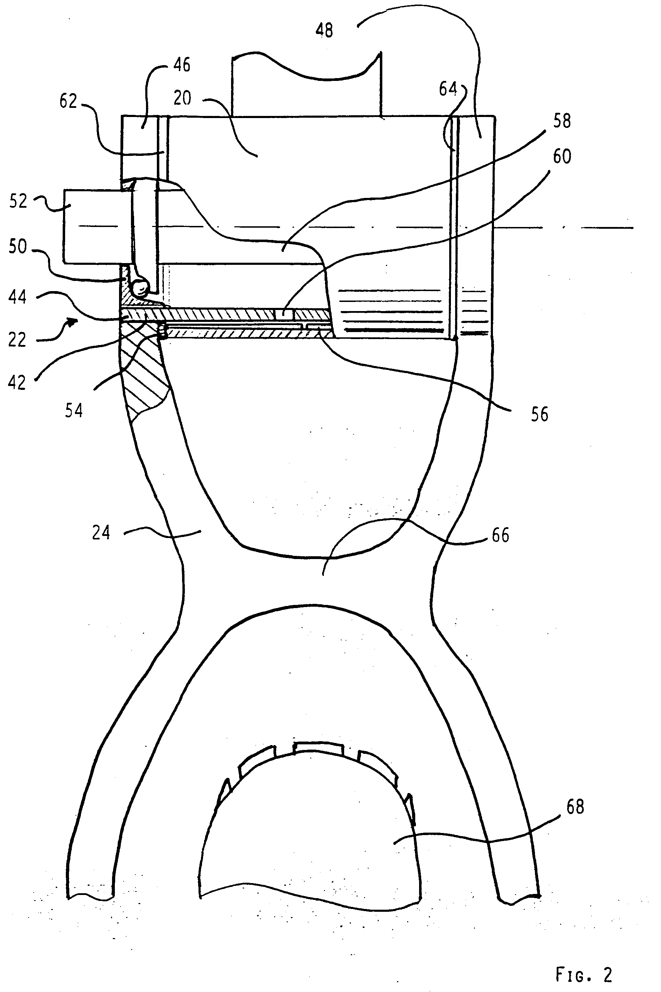

Ein Strebenwinkel 38, der zwischen den Sattelstreben 32 und den Hinterstreben 30 aufgespannt ist, ist jedoch relativ gering, so daß eine kurze und vergleichsweise leichtgewichtige Druckfeder 36 verwendet werden kann, die zudem auch noch relativ weit unten angeordnet ist, was aus Gründen der Schwerpunktlage günstig ist. Damit sich Ausfallenden, von denen ein Ausfallende 40 aus Fig. 1 ersichtlich ist, nicht gegeneinander bewegen können, ist zur zusätzlichen Aussteifung bereits die Hinterschwingenmuffe 24 mit einer Querstrebe versehen, die aus Fig. 2 ersichtlich ist.

Wie aus Fig. 2 ersichtlich ist, weist das Schwenklager 22 neben der Tretlagermuffe 20 und der Hinterschwingenmuffe 24 einen Lagerzylinder 42 eines Tretlagergehäuses 44 auf, der von Tretlagergehäuseflanschen 46 und 48 der Hinterschwingenmuffe 24 übergriffen wird. Die Tretlagergehäuseflansche 46 und 48 sind mit dem Lagerzylinder 42 drehfest verbunden. Sie können beispielsweise aufgeschrumpft oder aufgeklebt sein; im Extremfall reicht jedoch bereits die größere Reibung zwischen dem Tretlagergehäuse 44 und den Tretlagergehäuseflanschen 46 und 48 gegenüber der Reibung zwischen den Tretlagergehäuse 44 und der Tretlagermuffe 20.

In den Lagerzylinder 42 ist eine Tretlagermutter 50 eingeschraubt, die zugleich eine Lagerschale für die Bereitstellung der Abstützfunktionen gegenüber einer Tretlagerachse 54 bietet. Gemäß einer abgewandelten Ausgestaltung übergreift die Tretlagermutter 50 seitlich sowohl den Lagerzylinder 42 als auch die Tretlagergehäuseflansche 46 und 48, so daß insofern eine zusätzliche seitliche Abstützung vorgenommen ist, die besondere Befestigungsmaßnahmen zwischen dem Tretlagergehäuse 44 und den Tretlagergehäuseflanschen 46 und 48 entbehrlich macht.

Zur Verminderung der Gleitlagerreibung und zur Spielanpassung sind zwischen dem Lagerzylinder 42 und der Tretlagermuffe 20 Spielausgleichsringe 54, 56 vorgesehen, die mindestens auf ihrer Innenseite so ausgestaltet sind, daß eine Gleitlagerung gegenüber dem Lagerzylinder 42 bereitgestellt wird. Ein Innenraum 58 des Tretlagergehäuses 44 ist in an sich bekannter Weise mit einer Fettfüllung versehen, die über eine Versorgungsbohrung 60 auch in den Bereich der Spielausgleichsringe 54, 56 gelangen kann und dort die Gleitreibung vermindert.

Damit die Fettfüllung nicht austreten kann, ist der Spalt zwischen der Tretlagermuffe 20 und den Tretlagergehäusen 46 und 48 je mit Dichtungsringen 62, 64 abgedichtet, die zugleich dafür sorgen, daß in axialer Richtung - bezogen auf die Tretlagerachse 52 - eine spielfreie Lagerung vorliegt.

Die Hinterschwingenmuffe 24 weist ferner eine Querstrebe 66 auf, die sich möglichst weit hinter dem Schwenklager 22 erstreckt und die Tretlagergehäuseflansche 46 und 48 miteinander verbindet. Nachdem die Tretlagergehäuseflansche 46 und 48 fest auf dem Lagerzylinder 42 angebracht sind, besteht eine Art Gitterkonstruktion, die einer unabhängigen Bewegung der beiden Hinterstreben 30 gegeneinander entgegenwirkt. Es versteht sich, daß die Querstrebe 66 einen ausreichenden Abstand zu einem Hinterreifen 68 des Fahrads einhält.

## Patentansprüche

1. Gefedertes Fahrrad mit einer zwei Hinterstreben aufweisenden Hinterschwinge, die um die Tretlagerachse schwenkbeweglich und gefedert gelagert ist, dadurch gekennzeichnet, daß eine Tretlagermuffe (20) des Fahrradrahmens (11) einen Lagerzylinder (42) des Tretlagergehäuses (44), welcher von Tretlagerflanschen (46, 48) je einer Hinterstrebe (30) drehfest übergriffen wird, drehbeweglich lagert und daß insbesondere die Tretlagerflansche (46, 48) der Hinterstreben (30) einstückig über eine Querstrebe (66) einer Hinterschwingenmuffe (24) miteinander verbunden sind.

2. Fahrrad nach Anspruch 1, dadurch gekennzeichnet, daß eine separate Lagerbuchse, insbesondere eine Gewindebuchse oder ein handelsüblicher Lagerzylinder (42), insbesondere eines gekapselten Tretlagers, durch die Tretlagerflansche (46, 48) der Hinterschwinge und die Lagermuffe (20) des Rahmens (11) gesteckt ist, der an seinem Außenumfang gegebenenfalls über Spielausgleichsringe (54, 56) die Lagerfläche der Tretlagermuffe (20) bildet.

3. Fahrrad nach einem der vorherigen Ansprüche, dadurch gekennzeichnet, daß ein Lagerzylinder (42) oder die Lagerbuchse drehfest und momentenstabil mit den Tretlagerflanschen (46, 48) der Hinterstreben (30) unter Bildung einer Gitterstruktur mit der Querstrebe (66) verbunden ist.

4. Fahrrad nach einem der vorhergehenden Ansprüche, dadurch gekennzeichnet, daß ein Lagerzylinder (42) oder die Lagerbuchse mit den Tretlagerflanschen (46, 48) durch Aufschrumpfen der Tretlagerflansche (46, 48), Verschweißen, Verlöten, Verschrauben oder Verkleben befestigt ist.

5. Fahrrad nach einem der vorhergehenden Ansprüchen, dadurch gekennzeichnet, daß die Tretlagermuffe (20) sich zwischen den Tretlagerflanschen (46, 48) erstreckt und mindestens 60%, insbesondere etwa 75%, der Breite des Tretlagers (26) einnimmt.

6. Fahrrad nach einem der vorhergehenden Ansprüche, dadurch gekennzeichnet, daß die einen Lagerzylinder (42) oder die Lagerbuchse des Tretlagers (26) nach der Art von Laschen umgreifende Hinterschwingenmuffe (24) als einstückiges, z.B. geschmiedetes oder gegossenes Teil ausgebildet ist und die Hinterstreben (30) über die Querstrebe (66) torsionssteif miteinander verbindet.

7. Fahrrad nach einem der vorhergehenden Ansprüche, dadurch gekennzeichnet, daß die Querstrebe (66) von dem Tretlager (26) etwa um den ein- bis zweifachen Tretlagerdurchmesser beabstandet ist.

8. Fahrrad nach einem der vorhergehenden Ansprüche, dadurch gekennzeichnet, daß Spielausgleichsringe (54, 56) in die Tretlagermuffe (20) eingesetzt sind, die innen eine als Gleitlager ausgestattete, insbesondere gehärtete Oberfläche aufweisen, die den Lagerzylinder (42) oder die Lagerbuchse der Hinterschwinge lagern.

9. Fahrrad nach einem der vorhergehenden Ansprüche, dadurch gekennzeichnet, daß zwischen Tretlagermuffe (20) und Tretlagerflanschen (46, 48) Dichtungsringe (62, 64) vorgesehen sind, die eine schmiermitteldichte Lagerung zwischen Lagermuffe (20) und dem Lagerzylinder (42) oder der Lagerbuchse der Tretlagerflansche (46, 48) erlauben.

10. Fahrrad nach einem der vorhergehenden Ansprüche, dadurch gekennzeichnet, daß das Lager zwischen dem Lagerzylinder (42), den Tretlagerflanschen (46, 48) und der Tretlagermuffe (20) des Rahmens (11) als Gleitlager ausgebildet ist, der Durchmesser der Tretlagermuffe (20) den Aussendurchmesser des Lagerzylinders (42) oder der separat eingesetzten Buchse und der Tretlagerflansche (46, 48) nur um weniges übersteigt.

11. Fahrrad nach einem der vorhergehenden Ansprüche, dadurch gekennzeichnet, daß als Tretlagermuffe (20) eine seitlich je etwas gekürzte Tretlagermuffe (20) verwendet ist und daß als Lagerzylinder (42) ein handelsübliches gekapseltes Tretlagergehäuse (44) oder eine Gewindebuchse verwendet ist, wobei der Durchmesserausgleich über Spielausgleichsringe (54, 56) zwischen diesen erfolgt.

12. Fahrrad nach einem der vorhergehenden Ansprüche, dadurch gekennzeichnet, daß jede Hinterstrebe (30) mit einer Sattelstrebe (32) verbunden ist, und daß die Sattelstreben (32) über einen Kniehebel (34), der zwei sich seitlich des Sattelrohres (16) des Rahmens (11) erstreckende Teile aufweist, miteinander verbunden sind.

13. Gefedertes Fahrrad mit einer zwei Hinterstreben aufweisenden Hinterschwinge, die um die Tretlagerachse schwenkt, beweglich und gefedert gelagert ist, dadurch gekennzeichnet, daß die Tretlagerflanschen mit dem Rahmen verbunden sind und das Tretlagergehäuse übergreifen und daß die Tretlagermuffe auf dem Tretlagergehäuse gleitet und an der Hinterschwinge angebracht ist.

## Claims

1. Spring-suspended bicycle with a rear crank with two rear struts, which is swivel-mounted and spring-mounted around the bottom bracket bearing axis, characterised in that a bottom bracket bearing sleeve (20) of the bicycle frame (11) rotably mounts a bearing cylinder (42) of the bottom bracket bearing housing (44), which is covered with torsional resistance by bottom bracket bearing flanges (46, 48) of each of the rear struts (30) and that preferably the bottom bracket bearing flanges (46, 48) of the rear struts (30) are connected together in a single piece via a cross strut (66) of a rear crank sleeve (24).

2. Bicycle according to claim 1, characterised in that a separate bearing shell, preferably a threaded shell or a usual commercial bearing cylinder (42), preferably of an encapsulated bottom bracket bearing, is placed through the bottom bracket bearing flanges (46, 48) of the rear crank and the bearing sleeve (20) of the frame (11), which at its outer perimeter forms the bearing surface of the bottom bracket bearing sleeve (20), if necessary using play compensation rings (54. 56)

3. Bicycle according to one of the preceding claims, characterised in that a bearing cylinder (42) or the bearing shell is connected with torsional resistance and moment stable to the bottom bracket bearing flanges (46, 48) of the rear struts (30) forming a grid structure with the cross strut (66).

4. Bicycle according to one of the preceding claims, characterised in that a bearing cylinder (42) or the bearing shell is fastened to the the bottom bracket bearing flanges (46, 48) by shrinking of the bottom bracket bearing flanges (46, 48), welding, soldering, screwing or gluing.

5. Bicycle according to one of the preceding claims, characterised in that the bearing sleeve (20) extends between the bottom bracket bearing flanges (46, 48) and occupies at least 60%, preferably approximately 75% of the width of the bottom bracket bearing (26).

6. Bicycle according to one of the preceding claims, characterised in that the rear crank sleeve (24), encompassing a bearing cylinder (42) or the bearing shell of the bottom bracket bearing (26) in the manner of brackets, is formed as a single-piece, e.g. forged or cast part, and the rear struts (30) connect stiff against torsion via the cross strut (66)

7. Bicycle according to one of the preceding claims, characterised in that the cross strut (66) is distanced from the bottom bracket bearing (26) by approximately one to two times the diameter of the bottom bracket bearing.

8. Bicycle according to one of the preceding claims, characterised in that the play compensation rings (54, 56), which preferably have on the inside a hardened surface, fitted out as a friction bearing, which lodge the bearing cylinder (42) or the bearing shell of the rear crank are inserted into the bottom bracket bearing sleeve (20).

9. Bicycle according to one of the preceding claims, characterised in that washers (62, 64) are provided between bottom bracket bearing sleeve (20) and bottom bracket bearing flanges (46, 48), which permit a lubricant-proof arrangement of bearings between bearing sleeve (20) and bearing cylinder (42) or the bearing frame of the bottom bracket bearing flanges (46, 48).

10. Bicycle according to one of the preceding claims, characterised in that the bearing between the bearing cylinder (42), the bottom bracket bearing flanges (46, 48) and the bottom bearing sleeve (20) of the frame (11) is formed as a friction bearing, which exceeds by a small amount the diameter of the bottom bracket bearing sleeve (20), the outer diameter of the bearing cylinder (42) or that of the separately inserted shell and that of the bottom bracket bearing flange (46. 48).

11. Bicycle according to one of the preceding claims, characterised in that a bottom bracket bearing sleeve (20), which is slightly shortened on each side is used as a bottom bracket bearing sleeve (20) and a commercial usual encapsulated bottom bracket bearing housing (44) or a threaded frame is used as a bearing cylinder (42), with the diameter compensation between these being achieved by play compensation rings (54, 56).

12. Bicycle according to one of the preceding claims, characterised in that each rear strut (30) is connected to a saddle strut (32) and that the saddle struts (32), are connected to each other via a knee lever (34), which has two parts extending laterally to the saddle tube (16) of the frame (11).

13. Spring-suspended bicycle with a rear crank with two rear struts, which pivots around the bottom bracket bearing axis, is movable and spring-mounted, characterised in that the bottom bracket bearing flanges are connected to the frame and cover the bottom bracket bearing housing and that the bottom bracket bearing sleeve glides on the bottom bracket bearing housing and is mounted on the rear crank.

## Revendications

1. Bicyclette suspendu ayant une coulisse arrière à deux montants arrières, qui est logée de façon pivotable et sur ressorts autour de l'axe du pédalier, caractérisée en ce qu'un manchon du palier du pédalier (20) du cadre de la bicyclette (11) loge en un mouvement rotatoire un cylindre de palier (42) du boîtier du palier du pédalier (44), qui est couvert de façon à résister à la torsion par des collerettes du palier du pédalier (46, 48) de chacun des montants arrières (30) et que de préférence les collerettes du palier du pédalier (46, 48) des montants arrières (30) soient reliés entre elles en une seule pièce par une entretoise (66) d'un manchon d'une coulisse arrière (24).

2. Bicyclette selon la revendication 1, caractérisée en ce qu'un coussinet séparé, de préférence un coussinet taraudé ou un cylindre de palier de type commercial (42), de préférence d'un palier de pédalier blindé, soit passé à travers les collerettes du palier du pédalier (46, 48) de la coulisse arrière et du manchon du palier du pédalier (20) du cadre (11), qui à son périmètre externe, forme la surface de palier du manchon du palier du pédalier (20), si nécessaire par l'intermédiaire de bagues de compensation de jeu.

3. Bicyclette selon l'une ou l'ensemble des revendications précédentes, caractérisée en ce qu'un cylindre de palier (42) ou le coussinet soit relié aux collerettes du palier du pédalier (46, 48) des supports arrières (30) de façon à résister à la torsion et stable de moment, formant ainsi une structure de grille avec l'entretoise (66).

4. Bicyclette selon l'une ou l'ensemble des revendications précédentes, caractérisée en ce qu'un cylindre de palier (42) ou le coussinet soit attaché aux collerettes du palier du pédalier (46, 48) par le rétrécissement des collerettes du palier du pédalier (46, 48), par la soudure, le brasage, le vissage ou le collage.

5. Bicyclette selon l'une ou l'ensemble des revendications précédentes, caractérisée en ce que le manchon du palier du pédalier (20) s'étend entre les collerettes du palier du pédalier (46, 48) et occupe au moins 60%, de préférence à-peu-près 75% de la largeur du palier du pédalier (26).

6. Bicyclette selon l'une ou l'ensemble des revendications précédentes, caractérisée en ce que le manchon arrière de la coulisse (24), enveloppant le cylindre de palier (42) ou le coussinet du palier du pédalier (26) sous forme d'attaches, soit formé en une seule pièce, p.ex. forgé ou martelé, et relie, rigide à la torsion, les supports arrières (30) par l'entretoise (66)

7. Bicyclette selon l'une ou l'ensemble des revendications précédentes, caractérisée en ce que l'entretoise (66) soit distancé du palier du pédalier (26) par à-peu-près une à deux fois le diamètre du palier du pédalier.

8. Bicyclette selon l'une ou l'ensemble des revendications précédentes, caractérisée en ce que des bagues de compensation de jeu (54, 56), qui de préférence présentent à l'intérieur une surface durcie, équipée comme palier à glissement, qui héberge le cylindre de palier (42) ou le coussinet de la manivelle arrière soient insérés dans le manchon du palier du pédalier (20).

9. Bicyclette selon l'une ou l'ensemble des revendications précédentes, caractérisée en ce que des rondelles d'étanchéité (62, 64) soient prévues entre le manchon du palier du pédalier (20) et les collerettes du palier du pédalier (46, 48), permettant la disposition des paliers de façon étanche aux lubrifiants entre le manchon du palier du pédalier (20) et le cylindre de palier (42) ou le coussinet des collerettes du palier du pédalier (46, 48).

10. Bicyclette selon l'une ou l'ensemble des revendications précédentes, caractérisée en ce que le palier entre le cylindre de palier (42), les collerettes du palier du pédalier (46, 48) et le manchon du palier du pédalier (20) du cadre (11) soit formé comme palier à glissement, qui dépasse de peu le diamètre du manchon du palier du pédalier (20), le diamètre externe du cylindre de palier (42) ou celui du coussinet inséré séparément ou des collerettes du palier du pédalier (46. 48).

11. Bicyclette selon l'une ou l'ensemble des revendications précédentes, caractérisée en ce qu'un manchon du palier du pédalier (20), qui est légèrement raccourci de chaque côté soit utilisé comme manchon du palier du pédalier (20) et qu'un palier du pédalier blindé de type commercial (44) ou un coussinet taraudé soit employé comme cylindre de palier (42), la compensation de diamètre entre ceux-ci étant réalisée par des bagues de compensation de jeu (54, 56).

12. Bicyclette selon l'une ou l'ensemble des revendications précédentes, caractérisée en ce que chaque support arrière (30) soit relié à un support de selle (32) et que les supports de selle (32), soient relié entre eux par un levier à genouillère (34), qui présente deux parties s'étendant latéralement au tube de selle (16) du cadre (11).

13. Bicyclette suspendu ayant une coulisse arrière à deux montants arrières, que pivote autour de l'axe du palier du pédalier, est mobile et monté à ressorts, caractérisé en ce que les collerettes du palier du pédalier soient reliées au cadre et couvrent le palier du pédalier et que le manchon du palier du pédalier glisse sur le boîtier du palier du pédalier et soit montée sur la coulisse arrière.
